(19) **Europäisches Patentamt**

**European Patent Office**

**Office européen des brevets**

(11) **EP 0 799 579 B1**

(12) **FASCICULE DE BREVET EUROPEEN**

(45) Date de publication et mention
de la délivrance du brevet:
**03.07.2002 Bulletin 2002/27**

(51) Int Cl.⁷: **A23L 1/29**, A61K 35/78

(21) Numéro de dépôt: **97400781.7**

(22) Date de dépôt: **04.04.1997**

(54) **Complement alimentaire**

Nahrungsergänzungsmittel

Nutritional supplement

(84) Etats contractants désignés:
**AT BE CH DE DK ES GB GR IE IT LI LU MC NL PT SE**

(30) Priorité: **05.04.1996 FR 9604324**

(43) Date de publication de la demande:
**08.10.1997 Bulletin 1997/41**

(73) Titulaire: **Goupil, Jean-Jacques
F-92100 Boulogne (FR)**

(72) Inventeur: **Goupil, Jean-Jacques
F-92100 Boulogne (FR)**

(74) Mandataire: **Petit, Hélène
Cabinet Hélène Petit
94, Avenue Kléber
75116 Paris (FR)**

(56) Documents cités:
**US-A- 4 076 848**

**Description**

La présente invention a pour objet un complément alimentaire destiné à assurer et développer un apport optimal des substances naturelles dont a besoin un organisme en bonne santé, à la fois au niveau de la peau et de l'organisme en général.

Le complément alimentaire selon l'invention est constitué d'extraits végétaux et de vitamines, les extraits provenant de fruits et de légumes faisant partie de l'alimentation courante et les vitamines étant les vitamines E et C.

Selon la présente invention

- les extraits de fruits sont ceux des fruits suivants : figue, orange amère, citron vert et limette.
- les extraits de légumes sont ceux des légumes suivants : tomate, carotte, persil, céleri, fenouil, et/ou panais.

Le complément alimentaire peut se présenter sous forme liquide ou sous forme de poudre lyophilisée que l'on peut introduire dans des gélules.

Dans le cas de gélules, la composition du complément alimentaire selon l'invention est la suivante :

- de 415 à 445 mg d'extraits de fruits et légumes
- de 5 à 35 mg de vitamines

pour un poids total de 450 mg.

La dose utile du complément alimentaire selon l'invention tel que défini ci-dessus est de quatre gélules par jour : deux dans la journée, deux le soir au coucher.

Selon la présente invention, la formulation des gélules à prendre dans la journée est différente de celle des gélules à prendre le soir, les extraits de fruits et légumes ne sont pas présents dans les mêmes proportions et il n'y a pas de vitamines dans les gélules à prendre avant la nuit.

Afin de reconnaître les gélules-jour des gélules-nuit, une coloration particulière sera donnée à la gélule, par exemple jaune pour le jour et bleue pour la nuit.

D'une manière générale, les proportions des extraits de fruits et légumes se situent dans les fourchettes suivantes :

| Proportions pour une gélule - jour : | |
| --- | --- |
| Extrait de carotte | compris entre 5 et 50 mg |
| Extrait de persil | compris entre 5 et 50 mg |
| Extrait de fenouil | compris entre 5 et 50 mg |
| Extrait de citron vert | compris entre 5 et 50 mg |
| Extrait d'orange amère | compris entre 5 et 50 mg |
| Extrait de figue | compris entre 5 et 50 mg |
| Extrait de limette | compris entre 5 et 150 mg |

| Proportions pour une gélule - nuit : | |
| --- | --- |
| Extrait de tomate | compris entre 5 et 50 mg |
| Extrait de persil | compris entre 5 et 50 mg |
| Extrait de fenouil | compris entre 5 et 50 mg |
| Extrait de citron vert | compris entre 5 et 50 mg |
| Extrait d'orange amère | compris entre 100 et 400 mg |
| Extrait de figue | compris entre 5 et 50 mg |
| Extrait de limette | compris entre 5 et 150 mg |

En ce qui concerne les vitamines présentes dans les gélules - jour, les proportions sont de l'ordre d'environ 30 mg de vitamine C et 5 mg de vitamine E.

Les exemples suivants de gélules jour et de gélules nuit sont donnés à titre illustratif et non limitatif.

## FORMULE JOUR

|  | Quantité par gélule de 450 mg | Quantité pour 100 g |
|---|---|---|
| Vitamine C | 30,00 mg | 6,67 % |
| Vitamine E | 5,00 mg | 1,12 % |
| Extrait de carotte | 13,30 mg | 2,95 % |
| Extrait de persil | 10,00 mg | 2,22 % |
| Extrait de céleri | 10,00 mg | 2,22 % |
| Extrait de fenouil | 10,00 mg | 2,22 % |
| Extrait de citron vert | 10,00 mg | 2,22 % |
| Extrait d'orange amère | 351,70 mg | 78,16 % |
| Extrait de figue | 10,00 mg | 2,22 % |
|  | ----,---- | ----,---- |
|  | 450,00 mg | 100,00 % |

## FORMULE NUIT

|  | Quantité par gélule de 450 mg | Quantité pour 100 g |
|---|---|---|
| Extrait de tomate | 33,30 mg | 7,40 % |
| Extrait de persil | 10,00 mg | 2,22 % |
| Extrait de fenouil | 10,00 mg | 2,22 % |
| Extrait de céleri | 10,00 mg | 2,22 % |
| Extrait de citron vert | 10,00 mg | 2,22 % |
| Extrait d'orange amère | 366,67 mg | 81,50 % |
| Extrait de figue | 10,00 mg | 2,22 % |
|  | ----,---- | ----,---- |
|  | 450,00 mg | 100,00 % |

L'expérimentation a montré que l'association spécifique d'extraits de fruits et légumes telle que définie selon la présente invention donnait des résultats remarquables comme complément alimentaire permettant l'amélioration et la stabilisation de la mélatonine naturelle présente dans l'organisme, en protégeant la peau contre les agressions extérieures, en harmonisant l'horloge biologique, en améliorant le tonus général et la lutte contre le vieillissement.

**Revendications**

1.  Complément alimentaire **caractérisé en ce qu'**il contient des extraits naturels de fruits et légumes suivants : figue, orange amère, citron vert, limette, carotte, persil, céleri, fenouil, tomate, panais.

2.  Complément alimentaire selon la revendication 1, **caractérisé en ce qu'**il contient des proportions différentes des extraits de fruits et légumes ci-dessus mentionnés, selon que le complément alimentaire sera absorbé dans la journée ou le soir avant la nuit.

3.  Complément alimentaire selon les revendications 1 et 2, **caractérisé en ce que**, pour une absorption la journée, il comporte des proportions d'extraits de fruits et légumes comprises dans les fourchettes suivantes :

| Extrait de carotte | compris entre 5 et 50 mg |
|---|---|

(suite)

| | |
|---|---|
| Extrait de persil | compris entre 5 et 50 mg |
| Extrait de fenouil | compris entre 5 et 50 mg |
| Extrait de citron vert | compris entre 5 et 50 mg |
| Extrait d'orange amère | compris entre 5 et 50 mg |
| Extrait de figue | compris entre 5 et 50 mg |
| Extrait de limette | compris entre 5 et 150 mg |

4. Complément alimentaire selon les revendications 1 et 2, **caractérisé en ce que**, pour une absorption le soir, il comporte des proportions d'extraits de fruits et légumes comprises dans les fourchettes suivantes :

| | |
|---|---|
| Extrait de tomate | compris entre 5 et 50 mg |
| Extrait de persil | compris entre 5 et 50 mg |
| Extrait de fenouil | compris entre 5 et 50 mg |
| Extrait de citron vert | compris entre 5 et 50 mg |
| Extrait d'orange amère | compris entre 100 et 400 mg |
| Extrait de figue | compris entre 5 et 50 mg |
| Extrait de limette | compris entre 5 et 150 mg |

5. Complément alimentaire sous forme de gélule à absorber la journée, **caractérisé en ce qu'**il présente la formule suivante :

| | Quantité par gélule de 450 mg | Quantité pour 100 g |
|---|---|---|
| Vitamine C | 30,00 mg | 6,67 % |
| Vitamine E | 5,00 mg | 1,12 % |
| Extrait de carotte | 13,30 mg | 2,95 % |
| Extrait de persil | 10,00 mg | 2,22 % |
| Extrait de céleri | 10,00 mg | 2,22 % |
| Extrait de fenouil | 10,00 mg | 2,22 % |
| Extrait de citron vert | 10,00 mg | 2,22 % |
| Extrait d'orange amère | 351,70 mg | 78,16 % |
| Extrait de figue | 10,00 mg | 2,22 % |
| | ----,---- | ----,---- |
| | 450,00 mg | 100,00 % |

6. Complément alimentaire sous forme de gélule à absorber le soir, **caractérisé en ce qu'**il présente la formule suivante :

|  | Quantité par gélule de 450 mg | Quantité pour 100 g |
|---|---|---|
| Extrait de tomate | 33,30 mg | 7,40 % |
| Extrait de persil | 10,00 mg | 2,22 % |
| Extrait de fenouil | 10,00 mg | 2,22 % |
| Extrait de céleri | 10,00 mg | 2,22 % |
| Extrait de citron vert | 10,00 mg | 2,22 % |
| Extrait d'orange amère | 366,67 mg | 81,50 % |
| Extrait de figue | 10,00 mg | 2,22 % |
|  | ----,---- | ----,---- |
|  | 450,00 mg | 100,00 % |

**Patentansprüche**

1. Lebensmittelzusatz, **dadurch gekennzeichnet, dass** er folgende natürliche Fruchtund Gemüseextrakte enthält: Feige, Bitterorange, grüne Zitrone, süße Limette, Karotte, Petersilie, Sellerie, Fenchel, Tomate, Pastinak.

2. Lebensmittelzusatz gemäß Anspruch 1, **dadurch gekennzeichnet, dass** er verschiedene Anteile der vorgenannten Frucht- und Gemüseextrakte enthält, je nachdem, ob der Lebensmittelzusatz tagsüber oder abends vor der Nachtruhe aufzunehmen ist.

3. Lebensmittelzusatz gemäß Anspruch 1 oder 2, **dadurch gekennzeichnet, dass** er für eine Aufnahme tagsüber Anteile an Frucht- und Gemüseextrakten in folgenden Spannen enthält:

| Karottenextrakt | inbegriffen zwischen 5 und 50 mg |
|---|---|
| Petersilienextrakt | inbegriffen zwischen 5 und 50 mg |
| Fenchelextrakt | inbegriffen zwischen 5 und 50 mg |
| Extrakt grüner Zitrone | inbegriffen zwischen 5 und 50 mg |
| Bitterorangenextrakt | inbegriffen zwischen 5 und 50 mg |
| Feigenextrakt | inbegriffen zwischen 5 und 50 mg |
| Extrakt süßer Limette | inbegriffen zwischen 5 und 50 mg |

4. Lebensmittelzusatz gemäß Anspruch 1 und 2, **dadurch gekennzeichnet, dass** er für eine Aufnahme am Abend Anteile an Frucht- und Gemüseextrakten in folgenden Spannen enthält:

| Tomatenextrakt | inbegriffen zwischen 5 und 50 mg |
|---|---|
| Petersilienextrakt | inbegriffen zwischen 5 und 50 mg |
| Fenchelextrakt | inbegriffen zwischen 5 und 50 mg |
| Extrakt grüner Zitrone | inbegriffen zwischen 5 und 50 mg |
| Bitterorangenextrakt | inbegriffen zwischen 100 und 400 mg |
| Feigenextrakt | inbegriffen zwischen 5 und 50 mg |
| Extrakt süßer Limette | inbegriffen zwischen 5 und 150 mg |

5. Tagsüber aufzunehmender Lebensmittelzusatz in Kapselform, **dadurch gekennzeichnet, dass** er folgende Formel aufweist:

|  | Menge pro 450 mg Kapsel | Menge bei 100 g |
|---|---|---|
| Vitamin C | 30,00 mg | 6,67 % |
| Vitamin E | 5,00 mg | 1,12 % |

(fortgesetzt)

|  | Menge pro 450 mg Kapsel | Menge bei 100 g |
|---|---|---|
| Karottenextrakt | 13,30 mg | 2,95 % |
| Petersilienextrakt | 10,00 mg | 2,22% |
| Sellerieextrakt | 10,00 mg | 2,22 % |
| Fenchelextrakt | 10,00 mg | 2,22 % |
| Extrakt grüner Zitrone | 10,00 mg | 2,22 % |
| Bitterorangenextrakt | 351,70 mg | 78,16 % |
| Feigenextrakt | 10,00 mg | 2,22% |
|  | 450,00 mg | 100,00 % |

**6.** Abends aufzunehmender Lebensmittelzusatz in Kapselform, **dadurch gekennzeichnet, dass** er folgende Formel aufweist:

|  | Menge pro 450 mg Kapsel | Menge bei 100 g |
|---|---|---|
| Tomatenextrakt | 33,30 mg | 7,40 % |
| Petersilienextrakt | 10,00 mg | 2,22 % |
| Fenchelextrakt | 10,00 mg | 2,22 % |
| Sellerieextrakt | 10,00 mg | 2,22 % |
| Extrakt grüner Zitrone | 10,00 mg | 2,22 % |
| Bitterorangenextrakt | 366,67 mg | 81,50% |
| Feigenextrakt | 10,00 mg | 2,22% |
|  | 450,00 mg | 100,00 % |

**Claims**

**1.** Food supplement, **characterised** because it contains natural extracts of the following fruits and vegetables: fig, bitter orange, lime, sweet lime, carrot, parsley, celery, fennel, tomato, parsnip.

**2.** Food supplement according to claim 1, **characterised** because it contains different proportions of the above-mentioned fruit and vegetable extracts, depending on whether the food supplement will be consumed during the day or in the evening.

**3.** Food supplement according to claims 1 and 2, **characterised** because, for consumption during the day, it contains proportions of fruit and vegetable extracts that fall within the following ranges:

| Carrot extract | between 5 and 50 mg |
|---|---|
| Parsley extract | between 5 and 50 mg |
| Fennel extract | between 5 and 50 mg |
| Lime extract | between 5 and 50 mg |
| Bitter orange extract | between 5 and 50 mg |
| Fig extract | between 5 and 50 mg |
| Sweet lime extract | between 5 and 150 mg |

**4.** Food supplement according to claims 1 and 2, **characterised** because, for consumption in the evening, it contains proportions of fruit and vegetable extracts that fall within the following ranges:

| Tomato extract | between 5 and 50 mg |
|---|---|
| Parsley extract | between 5 and 50 mg |
| Fennel extract | between 5 and 50 mg |
| Lime extract | between 5 and 50 mg |

(continued)

| Bitter orange extract | between 100 and 400 mg |
| Fig extract | between 5 and 50 mg |
| Sweet lime extract | between 5 and 150 mg |

5. Food supplement in capsule form to be consumed during the day, **characterised** because it has the following formula:

|  | Quantity per 450 ml capsule | Quantity per 100 g |
|---|---|---|
| Vitamin C | 30.00 mg | 6.67 % |
| Vitamin E | 5.00 mg | 1.12 % |
| Carrot extract | 13.30 mg | 2.95 % |
| Parsley extract | 10.00 mg | 2.22 % |
| Celery extract | 10.00 mg | 2.22 % |
| Fennel extract | 10.00 mg | 2.22 % |
| Lime extract | 10.00 mg | 2.22 % |
| Bitter orange extract | 351.70 mg | 78.16 % |
| Fig extract | 10.00 mg | 2.22 % |
|  | 450.00 mg | 100.00 % |

6. Food supplement in capsule form to be consumed in the evening, **characterised** because it has the following formula:

|  | Quantity per 450 ml capsule | Quantity per 100 g |
|---|---|---|
| Tomato extract | 33.30 mg | 7.40 % |
| Parsley extract | 10.00 mg | 2.22 % |
| Fennel extract | 10.00 mg | 2.22 % |
| Celery extract | 10.00 mg | 2.22 % |
| Lime extract | 10.00 mg | 2.22 % |
| Bitter orange extract | 366.67 mg | 81.50 % |
| Fig extract | 10.00 mg | 2.22 % |
|  | 450.00 mg | 100.00 % |